# EUROPÄISCHE PATENTSCHRIFT

(11) **EP 3 423 729 B1**
(45) Veröffentlichungstag und Bekanntmachung des Hinweises auf die Patenterteilung: **22.01.2020**
(21) Anmeldenummer: 17707239.4
(22) Anmeldetag: 23.02.2017
(51) Int. Cl.: F16D 28/00, F16D 13/75

(54) **ELEKTROMECHANISCHER AKTUATOR ZUR BETÄTIGUNG EINES DURCH REIBUNGSKRAFTSCHLUSS KRAFTÜBERTRAGENDEN SYSTEMS**
ELECTROMECHANICAL ACTUATOR FOR ACTUATING A SYSTEM THAT TRANSMITS FORCE BY MEANS OF FRICTIONAL LOCKING
ACTIONNEUR ÉLECTROMÉCANIQUE POUR ACTIONNER UN SYSTÈME À TRANSMISSION DE FORCE PAR LIAISON PAR FRICTION

(30) Priorität: 04.03.2016 DE 102016002645
(43) Veröffentlichungstag der Anmeldung: 09.01.2019
(73) Patentinhaber: KNORR-BREMSE Systeme für Nutzfahrzeuge GmbH, 80809 München (DE)
(72) Erfinder: BALOGH, Levente, 2310 Szigetszentmiklós (HU); SZUCS, Gábor, 6000 Kecskemét (HU); TRENCSÉNI, Balázs, 2459 Rácalmás (HU)
(86) Internationale Anmeldenummer: PCT/EP2017/054113
(87) Internationale Veröffentlichungsnummer: WO 2017/148777

(56) Entgegenhaltungen:
- DE-A1- 19 950 454
- DE-A1-102012 108 300
- FR-A- 889 195
- US-A- 2 579 266

## Beschreibung

Die Erfindung betrifft einen elektro-mechanischen Aktuator zur Betätigung eines durch Reibungskraftschluss kraftübertragenden Systems über ein Stellglied, welches eine Normalkraft für den Reibungskraftschluss wenigstens teilweise erzeugt oder aufhebt, gemäß dem Oberbegriff von Anspruch 1. Die Erfindung betrifft auch ein durch Reibungskraftschluss kraftübertragendes System, bei welchem Reibkräfte zwischen zwei Reibpartnern abhängig von einer Normalkraft erzeugt werden, gemäß dem Oberbegriff von Anspruch 13.

Ein gattungsgemäßer elektro-mechanischer Aktuator bzw. ein gattungsgemäßes durch Reibungskraftschluss kraftübertragendes System ist aus US 2 579 266 A bekannt. Ein elektro-mechanischer Aktuator bzw. ein durch Reibungskraftschluss kraftübertragendes System ist weiterhin aus EP 3 088 761 A1 bekannt.

Der vorliegenden Erfindung liegt die Aufgabe zugrunde, einen elektro-mechanischen Aktuator und ein durch Reibungskraftschluss kraftübertragendes System derart weiter zu entwickeln, dass eine Verschleiß-Kompensation auf möglichst einfache Weise ausgeführt werden können.

Diese Aufgabe wird erfindungsgemäß durch die Merkmale von Anspruch 1 und Anspruch 13 gelöst.

### Offenbarung der Erfindung

Die Erfindung geht aus von einem elektro-mechanischen Aktuator zur Betätigung eines durch Reibungskraftschluss kraftübertragenden Systems über ein Stellglied, welches eine Normalkraft für den Reibungskraftschluss wenigstens teilweise erzeugt oder aufhebt, mit
- einem Gehäuse,
- dem in dem Gehäuse axial verschieblich gelagerten, wenigstens zwischen einer ersten axialen Position und einer zweiten axialen Position stellbaren Stellglied, einem elektronischen Steuergerät,
- einem elektromechanischen, von dem elektronischen Steuergerät gesteuerten Drehantrieb, welcher eine im Gehäuse gelagerte Welle rotatorisch antreibt.

Die Erfindung sieht vor:
- Einen zur Kompensation von Verschleiß des kraftübertragenden Systems vorgesehenen Verschleiß-Kompensationsmechanismus, welcher in dem Gehäuse axial verschieblich gelagert ist,
- einen Wandelmechanismus, welcher die Rotation der Welle in eine axiale Translation des Verschleiß-Kompensationsmechanismus wandelt, wobei
- die axiale Translation des Verschleiß-Kompensationsmechanismus auf das Stellglied wirkt, und wobei
- der Verschleiß-Kompensationsmechanismus wenigstens zwei gegeneinander verdrehbare Körper beinhaltet, einen ersten Körper und einen zweiten Körper, wobei eine Relativdrehung der Körper eine axiale Längenänderung des Verschleiß-Kompensationsmechanismus bewirkt, und wobei
- der erste Körper mittels eines Freilaufs mit der Welle drehkoppelbar oder von der Welle drehentkoppelbar und der zweite Körper in dem Gehäuse axial verschieblich, aber drehfest geführt ist, wobei
- der zweite Körper das Stellglied axial betätigt, und wobei
- der Freilauf derart ausgebildet ist, dass eine Drehkopplung oder Drehentkopplung der Welle in Bezug auf den ersten Körper wenigstens abhängig von der Rotationsrichtung der Welle ist, und wobei
- eine Sensoreinrichtung die axiale Ist-Position wenigstens eines, durch Rotation des Drehantriebs translatorisch bewegten Körpers des Aktuators in der ersten axialen Position des Stellglieds erfasst und ein entsprechendes Ist-Positionssignal in das elektronische Steuergerät einsteuert, und
- in dem elektronischen Steuergerät eine axiale Soll-Position für den wenigstens einen, durch Rotation des Drehantriebs translatorisch bewegten Körpers des Aktuators in der ersten axialen Position des Stellglieds gespeichert ist, wobei
   ∘ zum Stellen des Stellglieds von der ersten axialen Position in die zweite axiale Position das elektronische Steuergerät den Drehantrieb derart steuert, dass die Welle in einer ersten Rotationsrichtung und mit einer ersten Rotationsgeschwindigkeit dreht, bei welcher der Freilauf den ersten Körper von der Welle drehentkoppelt und der Wandelmechanismus die Rotation der Welle in eine axiale Translation des Verschleiß-Kompensationsmechanismus wandelt, welche dem Stellen des Stellglieds von der ersten axialen Position in die zweite axiale Position entspricht, und
   ∘ zum Stellen des Stellglieds von der zweiten axialen Position in die erste axiale Position das elektronische Steuergerät den Drehantrieb derart steuert, dass die Welle in der ersten Rotationsrichtung und mit einer zweiten, gegenüber der ersten Rotationsgeschwindigkeit kleineren Rotationsgeschwindigkeit dreht, bei welcher der Freilauf den ersten Körper von der Welle drehentkoppelt, und
   ∘ bei einer durch das Steuergerät detektierten, ein erlaubtes Maß überschreitenden Abweichung der axialen Ist-Position des wenigstens einen, durch Rotation des Drehantriebs translatorisch bewegten Körpers des Aktuators von der axialen Soll-Position das elektronische Steuergerät den Drehantrieb derart steuert, dass die Welle in einer zweiten, der ersten Rotationsrichtung entgegen gerichteten Rotationsrichtung angetrieben wird, in welcher der Freilauf den ersten Körper mit der Welle drehkoppelt und der erste Körper gegenüber dem zweiten Körper unter Änderung der axialen Länge des Verschließ-Kompensationsmechanismus derart verdreht wird, dass die Abweichung ausgeglichen wird.

Mit anderen Worten wird der Drehantrieb vom Steuergerät sowohl zum Stellen des Stellglieds von der ersten axialen Position in die zweite axiale Position als auch zum Stellen des Stellglieds von der zweiten axialen Position in die erste axiale Position derart angesteuert, dass die Welle dabei stets in der ersten Rotationsrichtung dreht und die Stellrichtung, d.h. ein Stellen des Stellglieds von der ersten axialen Position in die zweite axiale Position oder von der zweiten axialen Position in die erste axiale Position lediglich von der Rotationsgeschwindigkeit der Welle abhängt.

Der fliehkraftgesteuerte Wandelmechanismus ist bevorzugt fliehkraftgesteuert und derart ausgebildet, dass er die Rotation der Welle abhängig von der Rotationsgeschwindigkeit der Welle in eine axiale Translation des Verschleiß-Kompensationsmechanismus wandelt eine steigende Rotationsgeschwindigkeit der Welle höhere Fliehkräfte und damit eine größere Translation und umgekehrt eine sinkende Rotationsgeschwindigkeit der Welle geringere Fliehkräfte und damit eine kleinere Translation bewirken.

Wenn daher zum Stellen des Stellglieds von der zweiten axialen Position in die erste axiale Position das elektronische Steuergerät den Drehantrieb derart steuert, dass die Welle in der ersten Rotationsrichtung und mit einer zweiten, gegenüber der ersten Rotationsgeschwindigkeit kleineren Rotationsgeschwindigkeit dreht, dann wirken geringere Fliehkräfte, welche in geringeren Translationskräften in Richtung auf die zweite axiale Position resultieren. Wenn dann der Aktuator beispielsweise eine Reibungskupplungseinrichtung oder eine Rad-Bremseinrichtung betätigt, dann sind die von diesen Einrichtungen auf das Stellglied des Aktuators entgegen gerichtet wirkenden Kräfte, die beispielsweise von einer Kupplungsfeder erzeugt werden, in der Lage, das Stellglied des Aktuators gegen diese geringen Translationskräfte in die erste axiale Position zurückzustellen, welche dann einem eingekuppelten Zustand der Reibungskupplungseinrichtung bzw. einem gelösten Zustand der Rad-Reibungsbremseinrichtung entspricht.

Wenn aber zum Stellen des Stellglieds von der ersten axialen Position in die zweite axiale Position das elektronische Steuergerät den Drehantrieb derart steuert, dass die Welle in der ersten Rotationsrichtung und mit der ersten, gegenüber der zweiten Rotationsgeschwindigkeit größeren Rotationsgeschwindigkeit dreht, dann wirken größere Fliehkräfte, welche in größeren Translationskräften in Richtung auf die zweite axiale Position resultieren. Wenn dann der Aktuator beispielsweise eine Reibungskupplungseinrichtung betätigt, dann sind die Federkräfte dieser Einrichtung nicht mehr in der Lage, das Stellglied des Aktuators gegen die dann größeren Translationskräfte in die erste axiale Position zurückzustellen, welche dem eingekuppelten Zustand der Reibungskupplungseinrichtung entspricht. Vielmehr sorgen die dann größeren Translationskräfte, die gegen die Federkraft der Reibungskupplungseinrichtung wirken, für eine Translation des Stellglieds in die zweite axiale Position, welche dann dem ausgekuppelten Zustand der Reibungskupplungseinrichtung entspricht. Analoges gilt bei einer Rad-Bremsreibungseinrichtung.

Damit wird bei unveränderter erster Rotationsrichtung der Welle die Stellrichtung des Stellglieds (von der ersten axialen Position in die zweite axiale Position bzw. von der zweiten axialen Position in die erste axiale Position) lediglich durch die Rotationsgeschwindigkeit der Welle gesteuert, was durch das Steuergerät auf einfache Weise bewerkstelligt werden kann. Der Vorteil liegt darin, dass keine Drehrichtungsumkehr des Drehantriebs mit Auftreten von Trägheitsmomenten notwendig ist, um beide Stellrichtungen bedienen zu können, so dass die Umkehr der Stellrichtung eine hohe Dynamik bietet.

Zum Nachstellen eines übermäßigen Verschleißes des durch Reibungskraftschluss kraftübertragenden System mittels des Aktuators erfasst die Sensoreinrichtung die axiale Ist-Position wenigstens eines, durch Rotation des Drehantriebs translatorisch bewegten Körpers des Aktuators, wenn das Stellglied die erste axiale Position einnimmt oder eingenommen hat und steuert ein entsprechendes Ist-Positionssignal in das elektronische Steuergerät ein. Folglich korrespondiert die axiale Ist-Position des wenigstens einen Körpers mit der ersten axialen Position des Stellglieds. Ebenso korrespondiert auch die gespeicherte axiale Soll-Position für den wenigstens einen, durch Rotation des Drehantriebs translatorisch bewegten Körpers des Aktuators mit der ersten axialen Position des Stellglieds.

Dann wird erforderlichenfalls, d.h. zum Nachstellen eines erfassten übermäßigen Verschleißes bei einer durch das Steuergerät detektierten, ein erlaubtes Maß überschreitenden Abweichung der axialen Ist-Position des wenigstens einen, durch Rotation des Drehantriebs translatorisch bewegten Körpers des Aktuators von der axialen Soll-Position die Welle vom Drehantrieb in der zweiten Rotationsrichtung angetrieben, wobei diese zweite Rotationsrichtung dann bevorzugt ausschließlich der Verschleißnachstellung vorbehalten ist. Da eine Verschleißnachstellung nicht so oft und so schnell wie eine Umkehr der Stellrichtung erforderlich ist, ist die hier schlechtere Dynamik kaum von Nachteil.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform beinhaltet der fliehkraftgesteuerte Wandelmechanismus wenigstens Folgendes:
- Wenigstens eine von der Welle drehgetriebene, in radialer Richtung ausfahrbare oder einfahrbare Fliehkraftmasse, deren radiale Ausfahrbewegung oder Einfahrbewegung abhängig von der Rotationsgeschwindigkeit der Welle ist, wobei die Ausfahrbewegung mit steigender Rotationsgeschwindigkeit größer und mit sinkender Rotationsgeschwindigkeit kleiner wird,
- ein mit der Welle drehgekoppeltes Getriebe, welches die radiale Ausfahrbewegung oder Einfahrbewegung der wenigstens einen Fliehkraftmasse in eine axiale Bewegung eines mit der Welle mitdrehenden, aber gegenüber der Welle axial beweglichen Druckstücks wandelt.

Ein solcher Wandelmechanismus wird beispielsweise in der eingangs erwähnten unveröffentlichten europäischen Patentanmeldung mit der Anmeldenummer 15165585 beschrieben. Im Unterschied zu dem dort beschriebenen Wandelmechanismus ist das Druckstück über den Freilauf abhängig von seiner Rotationsrichtung mit dem ersten Körper des Verschleiß-Kompensationsmechanismus drehkoppelbar oder von dem ersten Körper des Verschleiß-Kompensationsmechanismus drehentkoppelbar.

Gemäß einer Weiterbildung ist das Druckstück an der Welle durch eine Druckfedereinrichtung axial abgestützt. Das Druckstück wird insbesondere durch eine Hülse gebildet, in deren Hülsenbohrung die Druckfedereinrichtung axial abgestützt ist. Weiterhin weist das Druckstück einen Fortsatz auf, der in den ersten Körper hineinragt, wobei zwischen einer radial inneren Umfangsfläche des ersten Körpers und einer radial äußeren Umfangsfläche des Fortsatzes des Druckstücks der beispielsweise ringförmige Freilauf angeordnet ist.

Besonders bevorzugt ist das mit der wenigstens einen Fliehkraftmasse drehgekoppelte Getriebe ein Hebelgetriebe. Gemäß einer Weiterbildung weist das das Hebelgetriebe wenigstens einen ersten Hebel auf, der mit der Welle mitdrehend und an der Welle mittelbar oder unmittelbar um eine in Bezug zur Axialrichtung senkrechte Achse schwenkbar gelagert ist und an einem Ende wenigstens eine Fliehkraftmasse trägt und mit seinem anderen Ende mittelbar oder unmittelbar das Druckstück axial betätigt.

Gemäß einer Weiterbildung ist der erste Körper des Verschleiß-Kompensationsmechanismus gegenüber dem zweiten Körper des Verschleiß-Kompensationsmechanismus durch ein Gewinde verschraubbar ausgebildet. Alternativ ist jeglicher Mechanismus denkbar, mit welchem eine Wandelung einer Rotationsbewegung des ersten Körpers in eine Translationsbewegung des zweiten Körpers möglich ist.

Um Bauteile einzusparen, kann das Stellglied direkt durch den zweiten Körper des Verschleiß-Kompensationsmechanismus gebildet werden.

Bevorzugt wird der Drehantrieb durch einen Elektromotor gebildet, das dann von dem Steuergerät auf einfache Weise drehzahlgesteuert oder drehzahlgeregelt wird und auch hinsichtlich der Rotationsrichtung einfach steuerbar ist.

Der durch Rotation der Welle translatorisch bewegte Körper des Aktuators wird bevorzugt durch einen Körper des Verschleiß-Kompensationsmechanismus, das Stellglied oder durch das Druckstück gebildet.

Die Erfindung betrifft auch ein durch Reibungskraftschluss kraftübertragendes System, insbesondere in einem Fahrzeug, bei welchem Reibkräfte zwischen zwei Reibpartnern abhängig von einer Normalkraft erzeugt werden, wobei die Normalkraft durch einen oben beschriebenen Aktuator erzeugt oder wenigstens teilweise aufgehoben wird. Denkbar ist dabei eine Verwendung des Aktuators in jeglichem durch Reibungskraftschluss kraftübertragenden System, bei welchem Reibkräfte zwischen zwei Reibpartnern abhängig von einer Normalkraft erzeugt werden.

Besonders bevorzugt wird das durch Reibungskraftschluss kraftübertragende System durch eine Reibungskupplungseinrichtung einer Antriebsmaschine eines Fahrzeugs oder eine Rad-Reibungsbremseinrichtung eines Fahrzeugs gebildet. Denn bei solchen Systemen wird die Reibungskraft zwischen zwei Reibpartnern, im Falle der Reibungskupplungseinrichtung zwischen zwei Kupplungsscheiben und im Falle einer Rad-Reibungsbremseinrichtung zwischen Bremsbelägen und einer Bremsscheibe durch eine Normalkraft erzeugt, welche dann von dem Stellglied des Aktuators wenigstens teilweise erzeugt oder aufgehoben wird, je nachdem, ob die beiden Reibpartner im Ausgangszustand gegeneinander vorgespannt sind oder nicht.

Unter einer Rad-Reibungsbremseinrichtung soll bevorzugt eine Reibungsbremseinrichtung verstanden werden, welche lediglich auf ein Rad oder auf mehrere, auf einer Achse angeordnete Räder derselben Achsseite wirkt.

Bei einer Reibungskupplungseinrichtung einer Antriebsmaschine eines Fahrzeugs entspricht die erste axiale Position des Stellglieds des Aktuators beispielsweise einer eingekuppelten Position, in welcher die Reibungskupplungseinrichtung geschlossen oder eingerückt ist, während die zweite axiale Position des Stellglieds beispielsweise eine ausgekuppelte Position darstellt, in welcher die Reibungskupplungseinrichtung geöffnet oder ausgerückt ist. Bei einer solchen Reibungskupplungseinrichtung wirkt von Seiten der Reibungskupplung eine Axialkraft auf das Stellglied des Aktuators, welche dieses in die erste axiale Position drängt. Diese Axialkraft wird dann von dem mittels Rotation der Welle auf das Stellglied erzeugten und entgegen gerichteten Betätigungskraft beim Stellen von der ersten axialen Position in die zweite axiale Position überwunden.

Bei einer Rad-Reibungsbremseinrichtung eines Fahrzeugs entspricht die erste axiale Position des Stellglieds des Aktuators einer Löseposition der Rad-Reibungsbremseinrichtung, in welcher die Rad-Reibungsbremseinrichtung gelöst ist, während die zweite axiale Position des Stellglieds eine Zuspannposition darstellt, in welcher die Rad-Reibungsbremseinrichtung zugespannt ist.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung durch eine bevorzugten Ausführungsform eines elektro-mechanischen Aktuators gemäß der Erfindung;
- Fig.2a: eine Querschnittsdarstellung des elektro-mechanischen Aktuators von Fig.1 während einer Stellbewegung eines Stellglieds von einer ersten axialen Position in eine zweite axiale Position;
- Fig.2b: eine Querschnittsdarstellung einer Fliehkraftmasse des elektromechanischen Aktuators während der in Fig.2a dargestellten Stellbewegung des Stellglieds,
- Fig.3a: eine Querschnittsdarstellung des elektro-mechanischen Aktuators von Fig.1 während einer Stellbewegung des Stellglieds von der zweiten axialen Position in die erste axiale Position;
- Fig.3b: eine Querschnittsdarstellung der Fliehkraftmasse des elektromechanischen Aktuators während der in Fig.3a dargestellten Stellbewegung des Stellglieds;
- Fig.4a: eine Querschnittsdarstellung des elektro-mechanischen Aktuators von Fig.1 während einer Nachstellbewegung des Stellglieds zur Verschleißkompensation;
- Fig.4b: eine Querschnittsdarstellung der Fliehkraftmasse des elektromechanischen Aktuators während der in Fig.4a dargestellten Stellbewegung des Stellglieds.

### Beschreibung des Ausführungsbeispiels

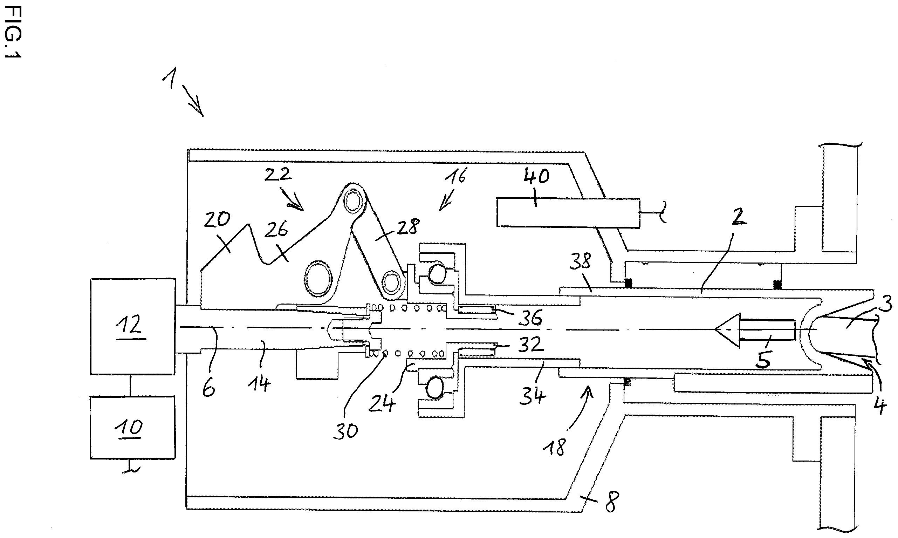

In **Fig.1** ist eine bevorzugte Ausführungsform eines elektro-mechanischen Aktuators 1 gemäß der Erfindung im Querschnitt dargestellt, wobei der Aktuator 1 hier beispielsweise eine hier nicht gezeigte Reibungskupplungseinrichtung einer Antriebsmaschine eines Fahrzeugs über ein Stellglied 2 des Aktuators 1 betätigt.

Dabei entspricht eine erste axiale Position des Stellglieds 2 des Aktuators 1 beispielsweise einer eingekuppelten Position, in welcher die Reibungskupplungseinrichtung geschlossen oder eingerückt ist, während die zweite axiale Position des Stellglieds 2 beispielsweise eine ausgekuppelte Position darstellt, in welcher die Reibungskupplungseinrichtung geöffnet oder ausgerückt ist. Das Stellglied 2 weist eine Aufnahme 4 hier beispielsweise in Form einer Ausnehmung auf, in welche ein Betätigungsglied 3 der Reibungskupplungseinrichtung eingreift, so dass eine Bewegung des Stellglieds 2 in Axialrichtung, welche hier parallel zu oder koaxial mit einer Längsachse 6 des Aktuators ist, das vorzugsweise koaxiale Betätigungsglied 3 der Reibungskupplungseinrichtung betätigt. "Axial" bedeutet hier daher stets parallel zu oder koaxial mit der Längsachse 6 des Aktuators 1.

In den Figuren bewirkt eine Bewegung des Stellglieds 2 nach rechts eine Bewegung in Richtung auf die ausgekuppelte Position (zweite axiale Position des Stellglieds 2) und eine Bewegung des Stellglieds 2 nach links eine Bewegung in Richtung auf die eingekuppelte Position (erste axiale Position des Stellglieds 2) der Reibungskupplungseinrichtung. Da das Betätigungsglied 3 der Reibungskupplungseinrichtung durch eine Kupplungsfeder in Richtung auf die eingekuppelte Position der Reibungskupplungseinrichtung, d.h. in Fig.1 nach links belastet ist, wirkt die in **Fig.1** durch einen Pfeil 5 symbolisierte Federkraft F_{K} als Rückstellkraft über das Betätigungsglied 3 auch auf das Stellglied 2 in Richtung auf die eingekuppelte Position (erste axiale Position des Stellglieds 2), in den Figuren nach links.

Das Stellglied 2 ist in einem 8 Gehäuse des Aktuators 1 drehfest und axial verschieblich gelagert und zwischen der ersten axialen Position, welche dem eingekuppelten Zustand der Reibungskupplungseinrichtung und der zweiten axialen Position, welche dem ausgekuppelten Zustand der Reibungskupplungseinrichtung entspricht, stellbar, wobei selbstverständlich Zwischenstellungen zwischen der ersten axialen Position und der zweiten axialen Position eingenommen werden können.

Der Aktuator 1 beinhaltet weiterhin einen elektromechanischen, von einem elektronischen Steuergerät 10 gesteuerten Drehantrieb 12 beispielsweise in Form eines Elektromotors, welcher eine in einem Gehäuse 8 des Aktuators 1 gelagerte Welle 14 antreibt. An dieser Welle 14 ist ein Wandelmechanismus 16 mitdrehend befestigt, welcher die Rotation der Welle 14 abhängig von der Rotationsgeschwindigkeit der Welle 14 in eine axiale Translation eines Verschleiß-Kompensationsmechanismus 18 wandelt. Der Verschleiß-Kompensationsmechanismus 18 dient zur Kompensation von Verschleiß der Reibungskupplungseinrichtung und ist in dem Gehäuse 8 beispielsweise über das Stellglied 2 axial verschieblich gelagert.

Der Wandelmechanismus 16 ist hier bevorzugt fliehkraftgesteuert und beinhaltet hier beispielsweise mehrere von der Welle 14 drehgetriebene, in radialer Richtung ausfahrbare oder einfahrbare Fliehkraftmassen 20, deren radiale Ausfahrbewegung oder Einfahrbewegung abhängig von der Rotationsgeschwindigkeit der Welle 14 ist, wobei fliehkraftbedingt die Ausfahrbewegung mit steigender Rotationsgeschwindigkeit größer und mit sinkender Rotationsgeschwindigkeit kleiner wird. Weiterhin beinhaltet der Wandelmechanismus 16 ein mit den Fliehkraftmassen 20 drehgekoppeltes Getriebe 22, welches die radiale Ausfahrbewegung oder Einfahrbewegung der Fliehkraftmassen 20 in eine axiale Bewegung eines mit der Welle 14 mitdrehenden, aber gegenüber der Welle 14 axial beweglichen Druckstücks 24 wandelt. Besonders bevorzugt ist das mit den Fliehkraftmassen 20 drehgekoppelte Getriebe 22 ein Hebelgetriebe. Das Hebelgetriebe 22 weist hier beispielsweise mehrere erste Hebel 26 auf, die mit der Welle 14 mitdrehend und an der Welle 14 mittelbar oder unmittelbar um in Bezug zur Längsachse 6 senkrechte Achsen schwenkbar gelagert sind und an einem Ende die Fliehkraftmassen 20 tragen und mit ihren anderen Enden beispielsweise über zweite, an die ersten Hebel 26 angelenkte Hebel 28 das Druckstück 24 axial betätigen. Ein solcher Wandelmechanismus 16 wird beispielsweise in der eingangs erwähnten unveröffentlichten europäischen Patentanmeldung mit der Anmeldenummer 15165585 beschrieben, deren diesbezügliche Offenbarung in die hier vorliegende ausdrücklich Beschreibung einbezogen wird. Deshalb soll hier nicht weiter darauf eingegangen werden.

Das mit der Welle 14 mittels des Hebelgetriebes 22 drehgekoppelte Druckstück 24 ist an der Welle 14 beispielsweise durch eine Druckfedereinrichtung 30 axial abgestützt. Das Druckstück 24 wird insbesondere durch eine Hülse gebildet, in deren Hülsenbohrung die Druckfedereinrichtung 30 axial abgestützt ist. Weiterhin weist das Druckstück 24 einen Fortsatz 32 auf, der in einen ersten Körper 34 des Verschleiß-Kompensationsmechanismus 18 hineinragt, wobei zwischen einer radial inneren Umfangsfläche des ersten Körpers 34 und einer radial äußeren Umfangsfläche des Fortsatzes 32 des Druckstücks 24 ein beispielsweise ringförmiger Freilauf 36 angeordnet ist.

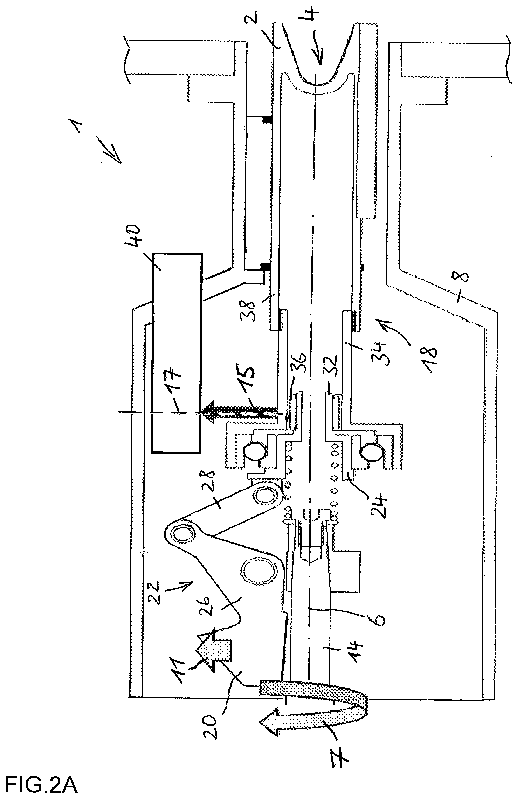

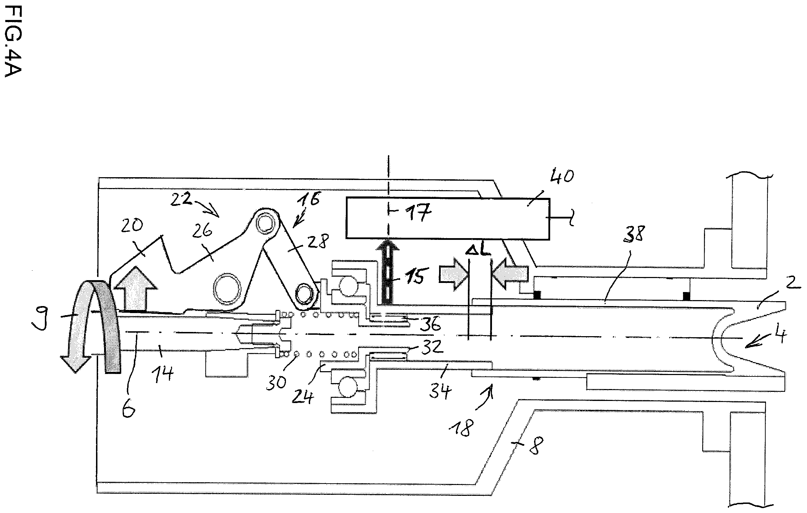

Der Freilauf 36 ist ausgebildet, dass eine Drehkopplung oder Drehentkopplung des Druckstücks 24 in Bezug auf den ersten Körper 34 abhängig von der Rotationsrichtung der Welle 14 ist, beispielsweise derart, dass wenn die Welle 14 in einer ersten Rotationsrichtung dreht, die in **Fig.2A** beispielsweise durch den gebogenen Pfeil 7 angedeutet ist, der Freilauf 36 den ersten Körper 34 von der Welle 14 drehentkoppelt. Hingegen koppelt der Freilauf 36 den ersten Körper 34 mit der Welle 14, wenn die Welle in einer zweiten, der ersten Rotationsrichtung entgegen gesetzten Rotationsrichtung dreht, wie der gebogene Pfeil 9 in **Fig.4A** veranschaulicht.

Das Druckstück 24 wird bei einer Drehung der Welle 14 in der ersten Rotationsrichtung mit dieser mitverdreht und infolge der über das Hebelgetriebe 22 übersetzten Fliehkräfte der Fliehkraftmassen 20 gleichzeitig translatorisch in Richtung auf die zweite axiale Position verschoben. Folglich überträgt das Druckstück 24 auf den ersten Körper 34 Axial- und Radialkräfte. Hierzu ist der Fortsatz des Druckstücks axial und radial in oder an dem ersten Körper gelagert, beispielsweise mittels eines Schrägkugellagers, so dass zwischen dem Druckstück sowohl Axial- als auch Radialkräfte übertragen werden können. Dadurch ist das Druckstück 24 in dem ersten Körper 34 axialfest und abhängig von der Rotationsrichtung der Welle 14 drehfest oder drehbar gelagert.

Der erste Körper 34 des Verschleiß-Kompensationsmechanismus 18 ist beispielsweise hülsenförmig ausgebildet und mittels eines Gewindes in einem zweiten, ebenfalls bevorzugt hülsenförmig ausgebildeten Körper 38 des Verschleiß-Kompensationsmechanismus 18 drehbar. Der zweite Körper 38 ist in dem Gehäuse 8 zwar längsverschieblich, aber drehfest geführt. Folglich bewirkt eine Drehung des ersten Körpers 34 gegenüber dem zweiten Körper 38 stets eine Längenänderung des Verschleiß-Kompensationsmechanismus 18 in Axialrichtung, d.h. parallel oder koaxial zur Längsachse 6.

Der zweite Körper 38 des Verschleiß-Kompensationsmechanismus 18 bildet hier bevorzugt das Stellglied 2 aus, welches auf das Betätigungsglied der Reibungskupplungseinrichtung wirkt. Folglich kann durch eine Längenänderung des Verschleiß-Kompensationsmechanismus 18 mittels Verdrehung des ersten Körpers 34 gegenüber dem zweiten Körper 38 ein Kupplungsverschleiß der Reibungskupplungseinrichtung kompensiert werden.

Weiterhin beinhaltet der Aktuator 1 eine Sensoreinrichtung 40, beispielsweise eine nach induktivem Prinzip messende Sensoreinrichtung, welche die axiale Ist-Position 15 beispielsweise des ersten Körpers 34 des Verschleiß-Kompensationsmechanismus 18 erfasst, wenn das Stellglied 2 seine erste axiale Position eingenommen hat oder einnimmt, hier die eingekuppelte Position der Reibungskupplungseinrichtung. Die Sensoreinrichtung 40 steuert dann ein entsprechendes Ist-Positionssignal in das elektronische Steuergerät 10 ein. Weiterhin ist in dem elektronischen Steuergerät 10 eine axiale Soll-Position 17 für den ersten Körper 34 bezogen auf die erste axiale Position des Stellglieds 2 gespeichert.

Alternativ hierzu kann die axiale Ist-Position 15 eines jeglichen Körpers des Aktuators 1 von der Sensoreinrichtung 40 erfasst und mit einer entsprechenden axialen Soll-Position17 verglichen werden, welcher aufgrund der Rotation des Elektromotors 12 eine Translation erfährt, wie beispielsweise des Stellglieds 2, des zweiten Körpers 38 oder des Druckstücks 24.

Vor diesem Hintergrund ist die Funktionsweise des Aktuators 1 wie folgt.

Gemäß **Fig.2A**, in welcher der Zustand des Aktuators 1 gezeigt ist, in welchem die Reibungskupplungseinrichtung nicht verschlissen ist, steuert das elektronische Steuergerät 10 den Elektromotor 12 zum Stellen des Stellglieds 2 von der ersten axialen Position in die zweite axiale Position, d.h. vom eingekuppelten Zustand in den ausgekuppelten Zustand derart, dass die Welle 14 in der ersten Rotationsrichtung 7 und mit der ersten Rotationsgeschwindigkeit dreht, bei welcher der Freilauf 36 den ersten Körper 34 von der Welle 14 drehentkoppelt und der Wandelmechanismus 16 die Rotation der Welle 14 in eine axiale Translation des Verschleiß-Kompensationsmechanismus 18 wandelt, welche dem Stellen des Stellglieds 2 von der ersten axialen Position in die zweite axiale Position entspricht. Der erste Körper 34 kann dann wegen des freilaufenden Freilaufs 36 nicht gegenüber dem zweiten, drehfest aber längsverschieblich im Gehäuse 8 geführten Körper 38 verdreht werden, so dass sich die Länge des Verschleiß-Kompensationsmechanismus 18 nicht verändert und dieser in seiner unveränderten Länge von dem Druckstück 24 axial verschoben wird.

Die erste relativ große Rotationsgeschwindigkeit wird durch den dicken gebogenen Pfeil 7 in **Fig.2A** angedeutet. Dann wirken größere, durch den Pfeil 11 illustrierte Fliehkräfte auf die Fliehkraftmassen 20 des Wandelmechanismus 16, welche in größeren Translationskräften in Richtung auf die zweite axiale Position resultieren. Wenn wie hier der Aktuator 1 eine Reibungskupplungseinrichtung betätigt, dann sind die Federkräfte dieser Einrichtung nicht mehr in der Lage, das Stellglied 2 des Aktuators 1 gegen die dann größeren Translationskräfte in die erste axiale Position zurückzustellen, welche dann dem eingekuppelten Zustand der Reibungskupplungseinrichtung entspricht. Vielmehr sorgen die dann größeren Translationskräfte, die gegen die Federkraft der Reibungskupplungseinrichtung wirken, für eine Translation des Stellglieds 2 in die zweite axiale Position, welche dann dem ausgekuppelten Zustand der Reibungskupplungseinrichtung entspricht.

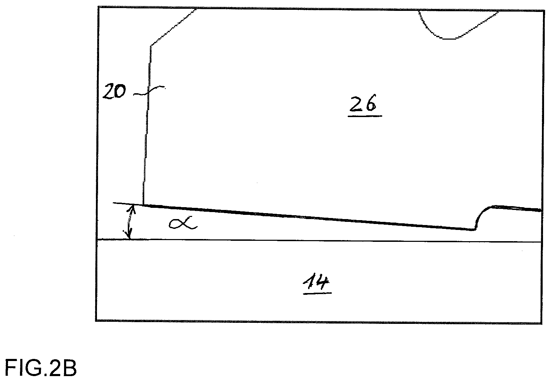

In **Fig.2B** ist der Winkel α zwischen den Fliehkraftmassen 20 und der Welle 14 dargestellt, wie er sich in der ersten axialen Position des Stellglieds 2, zu Beginn des Auskuppelvorgangs einstellt. Die Sensoreinrichtung 40 erfasst dann die der ersten axialen Position des Stellglieds 2 entsprechende Ist-Position des ersten Körpers 34 zu Beginn des Auskuppelvorgangs und steuert ein entsprechendes Signal in das elektronische Steuergerät 10 ein.

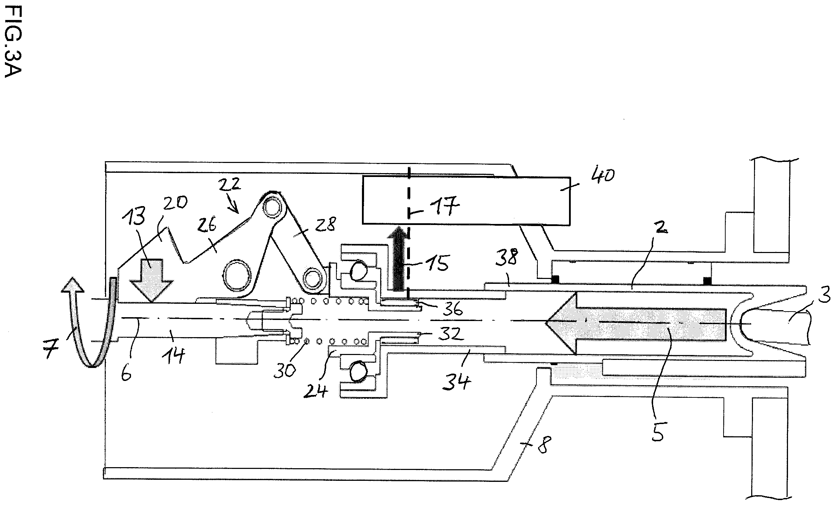

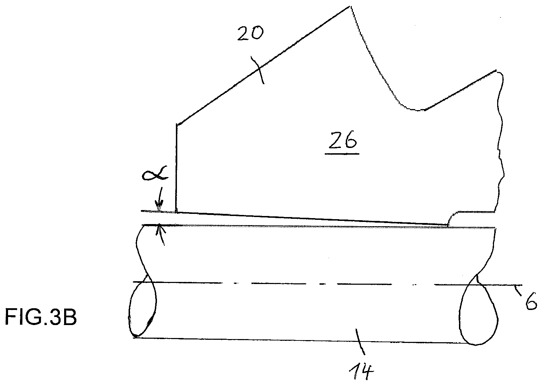

**Figuren 3A** und **3B** zeigen die Situation, wenn das Stellglied 2 von der zweiten axialen Position in die erste axiale Position, d.h. vom ausgekuppelten Zustand in den eingekuppelten Zustand rückgestellt wird. Dann dreht die Welle 14 zwar in der ersten Rotationsrichtung weiter, aber mit einer gegenüber der ersten Rotationsgeschwindigkeit kleineren zweiten Rotationsgeschwindigkeit, welche in Fig.3A mit einem dünneren Pfeil 7 veranschaulicht ist. In der ersten Rotationsrichtung hält der Freilauf 36 den ersten Körper 34 von der Welle 14 weiterhin drehentkoppelt, aber aufgrund der geringeren zweiten Rotationsgeschwindigkeit kann der Wandelmechanismus 16 die Rotation der Welle 14 nur noch in eine dann wesentlich geringere axiale Translation bzw. Translationskraft des Verschleiß-Kompensationsmechanismus 18 wandeln. Die entgegen gerichtete Rückstellkraft 5 der Kupplungsfeder, die über das Betätigungsglied 3 und das Stellglied 2 axial auf den Verschleiß-Kompensationsmechanismus 18 übertragen wird, verhindert aber diese geringe axiale Translation des Verschleiß-Kompensationsmechanismus 18. Vielmehr ist die Rückstellkraft 5 der Reibungskupplungseinrichtung größer, so dass das Stellglied 2 von der zweiten axialen Position in die erste axiale Position rückgeführt wird, welche dem eingekuppelten Zustand entspricht. Die Fliehkraftmassen 20 wandern dann in Richtung auf die Welle zu, wie durch den Pfeil 13 in **Fig.3A** veranschaulicht wird.

Der erste Körper 34 kann wegen des dann weiterhin freilaufenden Freilaufs 36 wiederum nicht gegenüber dem zweiten, drehfest aber längsverschieblich im Gehäuse 8 geführten Körper 38 verdreht werden, so dass die axiale Länge des Verschleiß-Kompensationsmechanismus 18 nicht verändert und dieser mit unveränderter axialer Länge vom Druckstück 24 verschoben wird.

Wenn die Reibungskupplungseinrichtung einen Verschleiß aufweist, welcher sich in axialer Richtung über ein bestimmtes Maß hinaus auswirkt, so kann der erste Körper 34 beim Rückhub von der zweiten axialen Position in die erste axiale Position nicht mehr seine ursprüngliche axiale Position gemäß **Fig.2A** erreichen. Vielmehr befindet sich dann der erste Körper 34 bzw. der gesamte Verschleiß-Kompensationsmechanismus 18 beim Erreichen der neuen ersten axialen Position durch das Stellglied 2 bezogen auf **Fig.2A** ein Stück weiter links, wie durch den Pfeil 15 in **Fig.3A** angedeutet ist. Diese Ist-Position des ersten Körpers 34 ist in **Fig.3A** durch den Pfeil 15 symbolisiert. Demnach verringert sich beim Erreichen der neuen, verschleißbedingten ersten axialen Position durch das Stellglied 2 auch der Winkel α zwischen den Fliehkraftmassen 20 und der Welle 14 gemäß **Fig.3B** in Bezug auf den ursprünglich größeren Winkel α gemäß **Fig.2B****.**

Die wiederum durch die Sensoreinrichtung 40 erfasste verschleißbedingte Ist-Position 15 des ersten Körpers 34 des Verschleiß-Kompensationsmechanismus 18 am Ende des Rückstellhubes von der zweiten axialen Position in die erste axiale Position des Stellglieds 2, welche hier der eingekuppelten Position der Reibungskupplungseinrichtung entspricht und welche in **Fig.3A** durch den Pfeil 15 veranschaulicht ist, wird als entsprechendes Ist-Positionssignal in das elektronische Steuergerät 10 eingesteuert. Dort wird die verschleißbedingte axiale Ist-Position 15 des ersten Körpers 34, welche der nun auch neuen verschleißbedingten ersten axialen Ist-Position des Stellglieds 2 entspricht, mit einer dort gespeicherten axialen Soll-Position für den ersten Körper 34 verglichen, die in **Fig.3A** durch die gestrichelte Linie 17 veranschaulicht ist. Bei einer durch das Steuergerät 10 detektierten, ein erlaubtes Maß überschreitenden Abweichung der neuen axialen Ist-Position 15 des ersten Körpers 34 des Verschleiß-Kompensationsmechanismus 18 von der axialen Soll-Position 17 steuert das elektronische Steuergerät 10 dann den Elektromotor 12 derart, dass die Welle 14 in einer zweiten, der ersten Rotationsrichtung entgegen gerichteten Rotationsrichtung 9 angetrieben wird, in welcher der Freilauf 36 den ersten Körper 34 mit der Welle 14 drehkoppelt und der erste Körper 34 gegenüber dem zweiten Körper 38 unter Änderung der axialen Länge des Verschleiß-Kompensationsmechanismus 18 derart verdreht wird, dass die Ist-Soll-Abweichung ausgeglichen wird. Die durch den Elektromotor 12 mit Hilfe des Verschleiß-Kompensationsmechanismus 18 nachzustellende Ist-Soll-Abweichung ist in **Fig.3A** durch den axialen Abstand zwischen der Ist-Position 15 und der Soll-Position 17 illustriert.

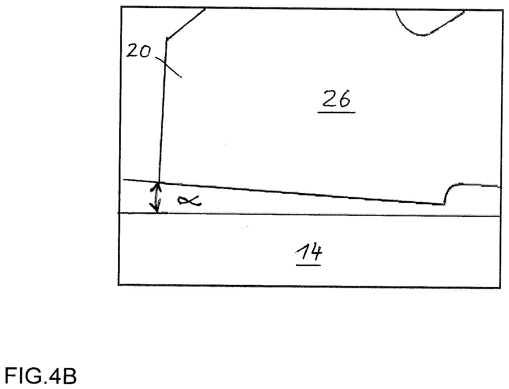

**Fig.4A** zeigt dann den Zustand nach der Verschleißnachstellung, in der axiale Abstand zwischen der Ist-Position 15 und der Soll-Position 17 wieder gleich Null ist. Dabei ist auch die durch Verdrehung des ersten Körpers 34 entstandene Längenänderung ΔL des Verschleiß-Kompensationsmechanismus 18 zwischen den beiden Pfeilen nicht maßstäblich dargestellt. Wie aus **Fig.4B** hervorgeht, nehmen dann nach der Nachstellung die Fliehkraftmassen 20 wieder den ursprünglichen Winkel α in Bezug zur Welle 14 ein, wie er ursprünglich, d.h. vor dem Auftreten des Verschleißes gemäß **Fig.2B** vorhanden war. Weil die Reibungskupplungseinrichtung noch nicht verschlissen ist, stimmt in **Fig.2A** die Ist-Position 15 mit der Soll-Position des ersten Körpers 34 überein.

Anstatt die Änderung der axialen Ist-Position des ersten Körpers 34 des Verschleiß-Kompensationsmechanismus 18 als Maßstab für die Verschleißnachstellung heranzuziehen, kann wie oben erwähnt alternativ hierfür auch die axiale Ist-Position des zweiten Körpers 38, des Stellglieds 2 selbst oder des Druckstücks 24 herangezogen und mit einer entsprechenden vorgegebenen axialen Soll-Position verglichen und die Abweichung ausgeregelt werden.

Anstatt zur Betätigung einer Reibungskupplungseinrichtung kann der oben beschriebene Aktuator für beliebige, durch Reibungskraftschluss kraftübertragende Systeme verwendet werden, insbesondere auch zur Betätigung einer Rad-Reibungsbremseinrichtung. In diesem Fall entspricht die erste axiale Position des Stellglieds des Aktuators einer Löseposition der Rad-Reibungsbremseinrichtung, in welcher die Rad-Reibungsbremseinrichtung gelöst ist, während die zweite axiale Position des Stellglieds eine Zuspannposition darstellt, in welcher die Rad-Reibungsbremseinrichtung zugespannt ist.

### Bezugszeichenliste

- 1: Aktuator
- 2: Stellglied
- 3: Betätigungsglied
- 4: Aufnahme
- 5: Rückstellkraft
- 6: Längsachse
- 7: erste Rotationsrichtung
- 8: Gehäuse
- 9: zweite Rotationsrichtung
- 10: Steuergerät
- 11: Pfeil
- 12: Drehantrieb
- 13: Pfeil
- 14: Welle
- 15: Ist-Position
- 16: Wandelmechanismus
- 17: Soll-Position
- 18: Verschleiß-Kompensationsmechanismus
- 20: Fliehkraftmassen
- 22: Getriebe
- 24: Druckstück
- 26: erste Hebel
- 28: zweite Hebel
- 30: Druckfedereinrichtung
- 32: Fortsatz
- 34: erster Körper
- 36: Freilauf
- 38: zweiter Körper
- 40: Sensoreinrichtung

## Patentansprüche

1. Elektro-mechanischer Aktuator (1) zur Betätigung eines durch Reibungskraftschluss kraftübertragenden Systems über ein Stellglied (2), welches eine Normalkraft für den Reibungskraftschluss wenigstens teilweise erzeugt oder aufhebt, mit
a) einem Gehäuse (8),
b) dem in dem Gehäuse (8) axial verschieblich gelagerten, wenigstens zwischen einer ersten axialen Position und einer zweiten axialen Position stellbaren Stellglied (2),
c) einem elektronischen Steuergerät (10),
d) einem elektromechanischen, von dem elektronischen Steuergerät (10) gesteuerten Drehantrieb (12), welcher eine im Gehäuse (8) gelagerte Welle (14) rotatorisch antreibt, **gekennzeichnet durch**
e) einen zur Kompensation von Verschleiß des kraftübertragenden Systems vorgesehenen Verschleiß-Kompensationsmechanismus (18), welcher in dem Gehäuse (8) axial verschieblich gelagert ist,
f) einen Wandelmechanismus (16), welcher die Rotation der Welle (14) in eine axiale Translation des Verschleiß-Kompensationsmechanismus (18) wandelt, I wobei
g) die axiale Translation des Verschleiß-Kompensationsmechanismus (18) auf das Stellglied (2) wirkt, und wobei
h) der Verschleiß-Kompensationsmechanismus (18) wenigstens zwei gegeneinander verdrehbare Körper (34, 38) beinhaltet, einen ersten Körper (34) und einen zweiten Körper (38), wobei eine Relativdrehung der Körper (34, 38) eine axiale Längenänderung des Verschleiß-Kompensationsmechanismus (18) bewirkt, und wobei
i) der erste Körper (34) mittels eines Freilaufs (36) mit der Welle (14) drehkoppelbar oder von der Welle (14) drehentkoppelbar und der zweite Körper (38) in dem Gehäuse (8) axial verschieblich, aber drehfest geführt ist, wobei
j) der zweite Körper (38) das Stellglied (2) axial betätigt, und wobei
k) der Freilauf (36) derart ausgebildet ist, dass eine Drehkopplung oder Drehentkopplung der Welle (14) in Bezug auf den ersten Körper (34) wenigstens abhängig von der Rotationsrichtung (7, 9) der Welle (14) ist, und wobei
l) eine Sensoreinrichtung (40) die axiale Ist-Position (15) wenigstens eines, durch Rotation der Welle (14) translatorisch bewegten Körpers (34) des Aktuators (1) in der ersten axialen Position des Stellglieds (2) erfasst und ein entsprechendes Ist-Positionssignal in das elektronische Steuergerät (10) einsteuert, und
m) in dem elektronischen Steuergerät (10) eine axiale Soll-Position (17) für den wenigstens einen, durch Rotation der Welle (14) translatorisch bewegten Körper (34) des Aktuators (1) in der ersten axialen Position des Stellglieds (2) gespeichert ist, wobei
m1) zum Stellen des Stellglieds (2) von der ersten axialen Position in die zweite axiale Position das elektronische Steuergerät (10) den Drehantrieb (12) derart steuert, dass die Welle (14) in einer ersten Rotationsrichtung (7) und mit einer ersten Rotationsgeschwindigkeit dreht, bei welcher der Freilauf (36) den ersten Körper (34) von der Welle (14) drehentkoppelt und der Wandelmechanismus (16) die Rotation der Welle (14) in eine axiale Translation des Verschleiß-Kompensationsmechanismus (18) wandelt, welche dem Stellen des Stellglieds (2) von der ersten axialen Position in die zweite axiale Position entspricht, und
m2) zum Stellen des Stellglieds (2) von der zweiten axialen Position in die erste axiale Position das elektronische Steuergerät den Drehantrieb derart steuert, dass die Welle (14) in der ersten Rotationsrichtung (7) und mit einer zweiten, gegenüber der ersten Rotationsgeschwindigkeit kleineren Rotationsgeschwindigkeit dreht, bei welcher der Freilauf (36) den ersten Körper (34) von der Welle (14) drehentkoppelt, und
m3) bei einer durch das Steuergerät (10) detektierten, ein erlaubtes Maß überschreitenden Abweichung der axialen Ist-Position (15) des wenigstens einen, durch Rotation der Welle (14) translatorisch bewegten Körpers (34) des Aktuators (1) von der axialen Soll-Position (17) das elektronische Steuergerät den Drehantrieb (12) derart steuert, dass die Welle (14) in einer zweiten, der ersten Rotationsrichtung entgegen gerichteten Rotationsrichtung (9) angetrieben wird, in welcher der Freilauf (36) den ersten Körper (34) mit der Welle (14) drehkoppelt und der erste Körper (34) gegenüber dem zweiten Körper (38) unter Änderung (ΔL) der axialen Länge des Verschließ-Kompensationsmechanismus (18) derart verdreht wird, dass die Abweichung (15, 17) ausgeglichen wird.

2. Aktuator nach Anspruch 1, **dadurch gekennzeichnet, dass** der Wandelmechanismus (16) ausgebildet ist, dass er die Rotation der Welle (14) abhängig von der Rotationsgeschwindigkeit der Welle (14) in eine axiale Translation des Verschleiß-Kompensationsmechanismus (18) wandelt.

3. Aktuator nach Anspruch 2, **dadurch gekennzeichnet, dass** der Wandelmechanismus (16) fliehkraftgesteuert ist, wobei eine steigende Rotationsgeschwindigkeit der Welle (14) höhere Fliehkräfte und eine größere Translation und eine sinkende Rotationsgeschwindigkeit der Welle (14) geringere Fliehkräfte und eine kleinere Translation bewirken.

4. Aktuator nach Anspruch 3, **dadurch gekennzeichnet, dass** der fliehkraftgesteuerte Wandelmechanismus (16) wenigstens Folgendes beinhaltet:
a) Wenigstens eine von der Welle (14) drehgetriebene, in radialer Richtung ausfahrbare oder einfahrbare Fliehkraftmasse (20), deren radiale Ausfahrbewegung oder Einfahrbewegung abhängig von der Rotationsgeschwindigkeit der Welle (14) ist, wobei die Ausfahrbewegung mit steigender Rotationsgeschwindigkeit größer und mit sinkender Rotationsgeschwindigkeit kleiner wird,
b) ein mit der Welle (14) drehgekoppeltes Getriebe (22), welches die radiale Ausfahrbewegung oder Einfahrbewegung der wenigstens einen Fliehkraftmasse (20) in eine axiale Bewegung eines mit der Welle (14) mitdrehenden, aber gegenüber der Welle (14) axial beweglichen Druckstücks (24) wandelt.

5. Aktuator nach Anspruch 4, **dadurch gekennzeichnet, dass** das Druckstück (24) über den Freilauf (36) abhängig von seiner Rotationsrichtung mit dem ersten Körper (34) des Verschleiß-Kompensationsmechanismus (18) drehkoppelbar oder von dem ersten Körper (34) des Verschleiß-Kompensationsmechanismus (18) drehentkoppelbar ist.

6. Aktuator nach Anspruch 4 oder 5, **dadurch gekennzeichnet, dass** das Druckstück (24) an der Welle (14) durch eine Druckfedereinrichtung (30) axial abgestützt ist.

7. Aktuator nach einem der Ansprüche 4 bis 6, **dadurch gekennzeichnet, dass** das mit der wenigstens einen Fliehkraftmasse (20) drehgekoppelte Getriebe (22) ein Hebelgetriebe ist.

8. Aktuator nach Anspruch 7, **dadurch gekennzeichnet, dass** das Hebelgetriebe (22) wenigstens einen ersten Hebel (26) aufweist, der mit der Welle (14) mitdrehend und an der Welle (14) mittelbar oder unmittelbar um eine in Bezug zur Axialrichtung senkrechte Achse schwenkbar gelagert ist und an einem Ende wenigstens eine Fliehkraftmasse (20) trägt und mit seinem anderen Ende mittelbar oder unmittelbar das Druckstück (24) axial betätigt.

9. Aktuator nach wenigstens einem der vorhergehenden Ansprüche, **dadurch gekennzeichnet, dass** der erste Körper (34) des Verschleiß-Kompensationsmechanismus (18) gegenüber dem zweiten Körper (38) des Verschleiß-Kompensationsmechanismus (18) durch ein Gewinde verschraubbar ausgebildet ist.

10. Aktuator nach wenigstens einem der vorhergehenden Ansprüche, **dadurch gekennzeichnet, dass** das Stellglied (2) durch den zweiten Körper (38) gebildet wird.

11. Aktuator nach wenigstens einem der vorhergehenden Ansprüche, **dadurch gekennzeichnet, dass** der Drehantrieb (12) durch einen Elektromotor gebildet wird.

12. Aktuator nach wenigstens einem der vorhergehenden Ansprüche, **dadurch gekennzeichnet, dass** der durch Rotation der Welle (14) translatorisch bewegte Körper (34) des Aktuators (1) durch einen Körper (34, 38) des Verschleiß-Kompensationsmechanismus, das Stellglied (2) oder das Druckstück (24) gebildet wird.

13. Durch Reibungskraftschluss kraftübertragendes System, bei welchem Reibkräfte zwischen zwei Reibpartnern abhängig von einer Normalkraft erzeugt werden, **dadurch gekennzeichnet, dass** die Normalkraft durch einen Aktuator (1) nach einem der vorhergehenden Ansprüche wenigstens teilweise erzeugt oder aufgehoben wird.

14. Durch Reibungskraftschluss kraftübertragendes System nach Anspruch 13, **dadurch gekennzeichnet, dass** es durch eine Reibungskupplungseinrichtung einer Antriebsmaschine eines Fahrzeugs oder eine Rad-Reibungsbremseinrichtung eines Fahrzeugs gebildet wird.

15. Durch Reibungskraftschluss kraftübertragendes System nach Anspruch 14, **dadurch gekennzeichnet, dass** bei der Reibungskupplungseinrichtung die erste axiale Position einen eingekuppelten Zustand und die zweite axialen Position einen ausgekuppelten Zustand repräsentiert.

16. Durch Reibungskraftschluss kraftübertragendes System nach Anspruch 14, **dadurch gekennzeichnet, dass** bei der Rad-Reibungsbremseinrichtung die erste axiale Position einen gelösten Zustand und die zweite axialen Position einen zugespannten Zustand repräsentiert.

## Claims

1. An electromechanical actuator (1) for actuating a system for the transmission of force by means of frictional locking via an actuating element (2) that at least partially produces or suppresses a normal force for this frictional locking, comprising
a) a housing (8),
b) the actuating element (2) that is mounted in the housing (8) such that it is able to move axially and can be moved at least between a first axial position and a second axial position,
c) an electronic control unit (10),
d) an electromechanical rotary drive (12) that is controlled by the electronic control unit (10) and rotationally drives a shaft (14) that is mounted in the housing (8), **characterised in that**
e) a wear compensation mechanism (18) that is provided to compensate for wear of the force transmitting system and is mounted in the housing (8) such that it is able to move axially,
f) a transforming mechanism (16) that transforms the rotation of the shaft (14) into an axial translation of the wear compensation mechanism (18),
g) the axial translation of the wear compensation mechanism (18) acting on the actuating element (2), and
h) the wear compensation mechanism (18) containing at least two bodies (34, 38), a first body (34) and a second body (38), which can be rotated in opposite directions, a relative rotation of the bodies (34, 38) resulting in a change in the axial length of the wear compensation mechanism (18), and
i) it being possible to rotationally couple the first body (34) to and rotationally decouple the first body (34) from the shaft (14) by means of a freewheel (36), and the second body (38) being mounted in the housing (8) such that is able to move axially but rotationally conjointly,
j) the second body (38) actuating the actuating element (2) axially, and
k) the freewheel (36) being designed such that a rotational coupling or decoupling of the shaft (14) in relation to the first body (34) is at least dependent on the direction of rotation (7, 9) of the shaft (14), and
l) a sensor device (40) detecting the actual axial position (15) of at least one body (34) of the actuator (1), this body (34) being moved translationally by the rotation of the shaft (14), in the first axial position of the actuating element (2) and sending a corresponding actual axial position signal to the electronic control unit (10), and
m) in the first axial position of the actuating element (2) there being stored in the electronic control unit (10) an axial nominal position (17) for the at least one body (34) of the actuator (1), this body being moved translationally by the rotation of the shaft (14),
m1) in order to move the actuating element (2) from the first axial position to the second axial position, the electronic control unit (10) controlling the rotary drive (12) such that the shaft (14) rotates in a first direction of rotation (7) and at a first rotation speed at which the freewheel (36) rotationally decouples the first body (34) from the shaft (14) and the transforming mechanism (16) transforms the rotation of the shaft (14) into an axial translation of the wear compensation mechanism (18) corresponding to the movement of the actuating element (2) from the first axial position into the second axial position, and
m2) in order to move the actuating element (2) from the second axial position to the first axial position, the electronic control unit (10) controlling the rotary drive (12) such that the shaft (14) rotates in the first direction of rotation (7) and at a second speed of rotation slower than the first speed of rotation at which the freewheel (36) rotationally decouples the first body (34) from the shaft (14), and
m3) when the control unit (10) detects that the actual axial position (15) of the at least one body (34) of the actuator (1), this body (34) being moved translationally by the rotation of the shaft (14), has deviated from the nominal axial position (17) by more than a permitted amount, the electronic control unit controlling the rotary drive (12) such that the shaft (14) is driven in a second direction of rotation (9) that is opposite the first direction of rotation and in which the freewheel (36) rotationally couples the first body (34) to the shaft (14) and the first body (34) is rotated in the opposite direction to the second body (38), resulting in a change (ΔL) of the axial length of the wear compensation mechanism (18) that compensates for the deviation (15, 17).

2. An actuator according to claim 1, **characterised in that** the transforming mechanism (16) is designed so as to transform the rotation of the shaft (14) into an axial translation of the wear compensation mechanism (18) dependent on the speed of rotation of the shaft (14).

3. An actuator according to claim 2, **characterised in that** the transforming mechanism (16) is centrifugally controlled, an increasing speed of rotation of the shaft (14) producing higher centrifugal forces and a greater translation, and a decreasing speed of rotation of the shaft (14) producing lower centrifugal forces and a lesser translation.

4. An actuator according to claim 3, **characterised in that** the centrifugally controlled transforming mechanism (16) contains at least the following:
a) at least one centrifugal mass (20) that is rotationally driven by the shaft (14), can be extended or retracted in the radial direction and whose radial extension or retraction movement is dependent on the speed of rotation of the shaft (14), the extension movement becoming greater as the speed of rotation increases and lesser as the speed of rotation decreases,
b) a transmission (22) that is rotationally coupled to the shaft (14) and that transforms the radial extension or retraction movement of the at least one centrifugal mass (20) into an axial movement of a pressure piece (24) that co-rotates with the shaft (14) but can be moved axially in relation to the shaft (14).

5. An actuator according to claim 4, **characterised in that**, depending on its direction of rotation, the pressure piece (24) can be rotationally coupled to the first body (34) of the wear compensation mechanism (18) or rotationally decoupled from the first body (34) of the wear compensation mechanism (18) by means of the freewheel (36).

6. An actuator according to claim 4 or 5, **characterised in that** the pressure piece (24) is axially braced against the shaft (14) by a compression spring device (30).

7. An actuator according to any one of claims 4 to 6, **characterised in that** the transmission (22) rotationally coupled to the at least one centrifugal mass (20) is a lever transmission.

8. An actuator according to claim 7, **characterised in that** the lever transmission (22) comprises at least a first lever (26) that is mounted such that it is able to co-rotate with the shaft (14) and to pivot on the shaft (14) directly or indirectly about an axis perpendicular to the axial direction that has at least one centrifugal mass (20) at one end and activates the pressure piece (24) axially directly or indirectly with its other end.

9. An actuator according to at least one of the preceding claims, **characterised in that** the first body (34) of the wear compensation mechanism (18) is designed such that it can be screwed by a thread in relation to the second body (38) of the wear compensation mechanism (18).

10. An actuator according to at least one of the preceding claims, **characterised in that** the actuating element (2) is formed by the second body (38).

11. An actuator according to at least one of the preceding claims, **characterised in that** the rotary drive (12) takes the form of an electric motor.

12. An actuator according to at least one of the preceding claims, **characterised in that** the body (34) of the actuator (1) that is moved translationally by rotating the shaft (14) takes the form of a body (34, 38) of the wear compensation mechanism (18), the actuating element (2) or the pressure piece (24).

13. A system that transmits force by frictional locking in which frictional forces between two frictional partners are generated dependent on a normal force, **characterised in that** the normal force is at least partly produced or suppressed by an actuator (1) according to any one of the preceding claims.

14. A system that transmits force by frictional locking according to claim 13, **characterised in that** it takes the form of a friction clutch device of a drive machine of a vehicle or a wheel friction braking device of a vehicle.

15. A system that transmits force by frictional locking according to claim 14, **characterised in that in** the case of the friction clutch device the first axial position represents an engaged state and the second axial position represents a disengaged state.

16. A system that transmits force by frictional locking according to claim 14, **characterised in that** in the case of the wheel friction braking device the first axial position the represents a released state and the second axial position represents an applied state.

## Revendications

1. Actionneur (1) électromécanique pour actionner un système de transmission de force à coopération de force de friction par l'intermédiaire d'un organe (2) d'actionnement, qui produit, au moins en partie, une force normale pour la coopération de force de friction ou y met fin, comprenant
a) un boîtier (8),
b) l'organe (2) d'actionnement monté coulissant axialement dans le boîtier (8) et déplaçable au moins entre une première position axiale et une deuxième position axiale,
c) un appareil (10) électronique de commande,
d) un entraînement (12) en rotation électromécanique, qui est commandé par l'appareil (10) électronique de commande et qui entraîne en rotation un arbre (14) monté dans le boîtier (8), **caractérisé par**
e) un mécanisme (18) de compensation d'usure, qui est prévu pour compenser de l'usure du système de transmission de force et qui est monté coulissant axialement dans le boîtier (8),
f) un mécanisme (16) de transformation, qui transforme la rotation de l'arbre (14) en une translation axiale du mécanisme (18) de compensation de l'usure, dans lequel
g) la translation axiale du mécanisme (18) de compensation de l'usure agit sur l'organe (2) d'actionnement et dans lequel
h) le mécanisme (18) de compensation de l'usure comporte au moins deux corps (34, 38) tournants opposés, un premier corps (34) et un deuxième corps (38), une rotation relative des corps (34, 38) provoquant une modification de longueur axiale du mécanisme (18) de compensation de l'usure, et dans lequel
i) le premier corps (34) peut, au moyen d'une roue libre (36), être couplé en rotation de l'arbre (14) ou être découplé en rotation de l'arbre (14) et le deuxième corps (38) est guidé à coulissement axial, mais fixe en rotation, dans le boîtier (8), dans lequel
j) le deuxième corps (38) actionne axialement l'organe (2) d'actionnement et dans lequel
k) la roue libre (36) est constituée de manière à ce qu'un couplage en rotation ou un découplage en rotation de l'arbre (14) par rapport au premier corps (34) dépende au moins du sens (7, 9) de rotation de l'arbre (14), et dans lequel
l) un dispositif (40) de capteur détecte, dans la première position axiale de l'organe (2) d'actionnement, la position (15) axiale réelle d'au moins un corps (34), déplacé en translation par rotation de l'arbre (14), de l'actionneur (1) et envoie un signal correspondant de position réelle à l'appareil (10) électronique de commande et
m) dans l'appareil (10) électronique de commande, une position (17) axiale de consigne du au moins un corps (34), déplacé en translation par rotation de l'arbre (14), de l'actionneur (1) dans la première position axiale de l'organe (2) d'actionnement est mise en mémoire, dans lequel
m1) pour faire passer l'organe (2) d'actionnement de la première position axiale à la deuxième position axiale, l'appareil (10) électronique de commande commande l'entraînement (12) en rotation, de manière à faire tourner l'arbre (14) dans un premier sens (7) de rotation et à une première vitesse de rotation, à laquelle la roue libre (36) découple en rotation le premier corps (34) de l'arbre (14) et le mécanisme (16) de transformation transforme la rotation de l'arbre (14) en une translation axiale du mécanisme (18) de compensation de l'usure, qui correspond au passage de l'organe (2) d'actionnement de la première position axiale à la deuxième position axiale et
m2) pour le passage de l'organe (2) d'actionnement de la deuxième position axiale à la première position axiale, l'appareil électronique de commande commande l'entraînement en rotation, de manière à faire tourner l'arbre (14) dans le premier sens (7) de rotation et à une deuxième vitesse de rotation plus petite que la première vitesse de rotation, à laquelle la roue libre (36) découple en rotation le premier corps (34) de l'arbre (14) et
m3) si l'on détecte par l'appareil (10) de commande un écart dépassant une valeur autorisée de la position (15) axiale réelle du au moins un corps (34), déplacé en translation par rotation de l'arbre (14), de l'actionneur (1), à la position (17) axiale de consigne, l'appareil électronique de commande commande l'entraînement en rotation de manière à entraîner l'arbre (14) dans un deuxième sens (9) de rotation opposé au premier sens de rotation, dans lequel la roule libre (36) couple en rotation le premier corps (34) à l'arbre (14) et fait subir une torsion au premier corps (34) par rapport au deuxième corps (38), en modifiant (ΔL) la longueur axiale du mécanisme (18) de compensation de l'usure de manière à compenser l'écart (15, 17).

2. Actionneur suivant la revendication 1, **caractérisé en ce que** le mécanisme (16) de transformation est constitué de manière à transformer la rotation de l'arbre (14) en fonction de la vitesse de rotation de l'arbre (14) en une translation axiale du mécanisme (18) de compensation de l'usure.

3. Actionneur suivant la revendication 2, **caractérisé en ce que** le mécanisme (16) de transformation est commandé par la force centrifuge, une vitesse de rotation croissante de l'arbre (14) provoquant des forces centrifuges plus intenses et une translation plus grande et une vitesse de rotation qui diminue de l'arbre (14) provoquant des forces centrifuges moins intenses et une translation plus petite.

4. Actionneur suivant la revendication 3, **caractérisé en ce que** le mécanisme (16) de transformation commandé par la force centrifuge comporte au moins ce qui suit :
a) au moins une masselotte (20) de force centrifuge entraînée en rotation par l'arbre (14) pouvant sortir ou rentrer dans la direction radiale et dont le déplacement de sortie ou le déplacement d'entrée radial dépend de la vitesse de rotation de l'arbre (14), le déplacement de sortie devenant plus grand, lorsque la vitesse de rotation augmente, et devenant plus petit, lorsque la vitesse de rotation diminue,
b) une transmission (22), qui est couplée en rotation à l'arbre (14) et qui transforme le déplacement de sortie ou le déplacement d'entrée radial de la au moins une masselotte (20) de force centrifuge en un déplacement axial d'une pièce (24) de pression tournant avec l'arbre (14), mais mobile axialement par rapport à l'arbre (14).

5. Actionneur suivant la revendication 4, **caractérisé en ce que** la pièce (24) de pression peut, par la roue libre (36), être, en fonction de son sens de rotation, couplée en rotation au premier corps (34) du mécanisme (18) de compensation de l'usure ou découplée en rotation du premier corps (34) du mécanisme (18) de compensation de l'usure.

6. Actionneur suivant la revendication 4 ou 5, **caractérisé en ce que** la pièce (24) de pression s'appuie axialement sur l'arbre (14) par un dispositif (30) à ressort de compression.

7. Actionneur suivant l'une des revendications 4 à 6, **caractérisé en ce que** la transmission (22) couplée en rotation à la au moins une masselotte (20) de force centrifuge est une transmission à levier.

8. Actionneur suivant la revendication 7, **caractérisé en ce que** la transmission (22) à levier a au moins un premier levier (26), qui, en tournant avec l'arbre (14), est monté pivotant sur l'arbre (14), indirectement ou directement, autour d'un axe perpendiculaire à la direction axiale et porte, à une extrémité, au moins une masselotte (20) de force centrifuge et, à son autre extrémité, actionne axialement, indirectement ou directement, la pièce (24) de pression.

9. Actionneur suivant au moins l'une des revendications précédentes, **caractérisé en ce que** le premier corps (34) du mécanisme (18) de compensation de l'usure est, par rapport au deuxième corps (38) du mécanisme (18) de compensation de l'usure, constitué de manière à pouvoir être vissé par un filetage.

10. Actionneur suivant au moins l'une des revendications précédentes, **caractérisé en ce que** l'organe (2) d'actionnement est formé par le deuxième corps (38).

11. Actionneur suivant au moins l'une des revendications précédentes, **caractérisé en ce que** l'entraînement (12) en rotation est formé d'un moteur électrique.

12. Actionneur suivant au moins l'une des revendications précédentes, **caractérisé en ce que** le corps (34), déplacé en translation par rotation de l'arbre (14), de l'actionneur (1) est formé par un corps (34, 38) du mécanisme de compensation de l'usure, l'organe (2) d'actionnement ou la pièce (24) de pression.

13. Système de transmission de force à coopération de force de friction, dans lequel des forces de friction sont produites entre deux partenaires de friction en fonction d'une force normale, **caractérisé en ce que** la force normale est produite, au moins en partie, ou il y est mis fin, par un actionneur (1) suivant au moins l'une des revendications précédentes.

14. Système de transmission de force à coopération de force de friction suivant la revendication 13, **caractérisé en ce qu'**il est formé d'un dispositif d'embrayage à friction d'une machine de propulsion d'un véhicule ou d'un dispositif de frein à friction de roue d'un véhicule.

15. Système de transmission de force à coopération de force de friction suivant la revendication 14, **caractérisé en ce que**, dans le dispositif d'embrayage à friction, la première position axiale représente un état embrayé et la deuxième position axiale un état débrayé.

16. Système de transmission de force à coopération de force de friction suivant la revendication 14, **caractérisé en ce que**, dans le dispositif de frein à friction de roue, la première position axiale représente un état desserré et la deuxième position axial un état serré.
